# EUROPEAN PATENT APPLICATION

(11) **EP 2 999 037 A1**
(43) Date of publication of application: **23.03.2016**
(21) Application number: 15171794.9
(22) Date of filing: 12.06.2015
(51) Int. Cl.: H01M 4/58, H01M 4/583, H01M 10/054, H01M 10/0563, H01M 4/62, H01M 10/052, H01M 4/38

(54) **POSITIVE ELECTRODE CONTAINING METAL CHLORIDE AND ALKALI METAL CHLORIDE AND ALKALI METAL-ION SECONDARY BATTERY HAVING THE SAME**

(30) Priority: 16.09.2014 KR 20140122855
(71) Applicant: Korea Electronics Technology Institute, Gyeonggi-do 463-816 (KR); Industry - University Cooperation Foundation Hanyang University, Seoul 133-791 (KR)
(72) Inventor: Jeong, Goojin, 463-729 Gyeonggi-do (KR); Kim, Hansu, 150-771 Seoul (KR); Kim, Youngjun, 463-882 Gyeonggi-do (KR)
(74) Representative: TBK

(57) **Abstract**

The present invention relates to a positive electrode containing a metal chloride and an alkali metal chloride and an alkali metal-ion secondary battery including the same. The alkali metal-ion secondary battery according to the present invention includes a negative electrode, a positive electrode containing a metal chloride and an alkali metal chloride, and a sulfur dioxide-based inorganic electrolyte solution containing an inorganic electrolyte including sulfur dioxide (SO₂) and an alkali metal salt. As the alkali metal-ion secondary battery according to the present invention uses a mixture of the metal chloride and the alkali metal chloride as a positive electrode material, and an alkali-ion electrolyte as a sulfur dioxide-based inorganic electrolyte, compared to the conventional sodium-ion secondary battery, the alkali metal-ion secondary battery can be used at room temperature and pre-charged, and have improved energy density and power density.

## Description

### CROSS-REFERENCE TO RELATED APPLICATION

This application claims priority to and the benefit of Korean Patent Application No. 10-2014-0122855 filed in the Korean Intellectual Property Office on September 16, 2014, the entire contents of which are incorporated herein by reference.

### TECHNICAL FIELD

The present invention relates to a secondary battery, and more particularly, to a positive electrode containing metal chloride and alkali metal chloride as positive electrode materials and an alkali metal-ion secondary battery having the same.

### BACKGROUND

As customer demands are changed to digitalization and high performance of electronic devices, market demands are also changing to development of thin and light-weight batteries having high capacity due to high energy density. In addition, to cope with future energy and environmental problems, development of hybrid electric automobiles or electric automobiles and fuel cell automobiles is actively progressing, and thus larger batteries to be used for power of an automobile is required.

As a compact, light-weight and high capacity rechargeable battery, a lithium-based secondary battery is commercialized, and used in portable electronic and communication devices such as compact video cameras, mobile phones, notebook computers, and the like. A lithium secondary battery is rechargeable because it consists of a positive electrode, a negative electrode and an electrolyte, and serves to transfer energy by moving lithium ions emitted from a positive electrode active material between both electrodes, that is, inserting the lithium ions into a negative electrode active material in charging and releasing the lithium ions in discharging.

Meanwhile, a study on a sodium-based secondary battery using sodium instead of lithium is recently being reviewed. Due to the largest reserves of sodium, if a secondary battery can be manufactured using sodium instead of lithium, it may be manufactured at a low cost.

While the sodium-based secondary battery is useful as described above, a conventional sodium metal-based secondary battery, for example, a Na-S battery (NAS) or a Na-NiCl₂ battery (ZEBRA), cannot be used at room temperature. In other words, the conventional sodium metal-based secondary battery is degraded in battery performance because of problems of battery safety and corrosion, which are caused by use of liquid sodium and a positive electrode active material at a high temperature. Meanwhile, recently, sodium-ion batteries using release/insertion of sodium ions are being actively studied, but energy density and life span characteristics of the batteries still remain low. For this reason, a sodium-based secondary battery which can be used at room temperature and have excellent energy density and life span characteristics is being demanded.

### [Prior Art Document]

### [Patent Document]

Korean Patent No. 10-1254613 (registration date: April 9, 2013)

### SUMMARY

The present invention is directed to providing a positive electrode containing a metal chloride and an alkali metal chloride which can solve problems of battery performance and safety, and an alkali metal-ion secondary battery including the same.

The present invention is also directed to providing a positive electrode containing a metal chloride and an alkali metal chloride having a high energy density and a high power density, and an alkali metal-ion secondary battery including the same, which enables pre-charging and is operated at room temperature.

One aspect of the present invention provides an alkali metal-ion secondary battery, which includes a negative electrode, a positive electrode containing a metal chloride and an alkali metal chloride, and a sulfur dioxide-based inorganic electrolyte solution containing an inorganic electrolyte including sulfur dioxide (SO₂) and an alkali metal salt.

In the alkali metal-ion secondary battery according to the present invention, the metal chloride may include CuCl₂, WCl₅, WCl₄, CuCl, NiCl₂, FeCl₂, FeCl₃, CoCl₂, MnCl₂, CrCl₂, CrCl₃, VCl₂, VCl₃, ZnCl₂, ZrCl₄, NbCl₅, MoCl₃, MoCl₅, RuCl₃, RhCl₃, PdCl₂, AgCl or CdCl₂.

In the alkali metal-ion secondary battery according to the present invention, the alkali metal chloride may include NaCl, LiCl or KCl.

In the alkali metal-ion secondary battery according to the present invention, contents of the metal chloride and the alkali metal chloride in the positive electrode may be 50 to 99 wt%.

In the alkali metal-ion secondary battery according to the present invention, the negative electrode includes a carbon or metal material not containing sodium.

In the alkali metal-ion secondary battery according to the present invention, the negative electrode includes a carbon-, metal-, alloy- or intermetallic compound-based material or an inorganic material.

In the alkali metal-ion secondary battery according to the present invention, the metal-, alloy- and intermetallic compound-based materials may be materials including tin (Sn), silicon (Si) or antimony (Sb).

In the alkali metal-ion secondary battery according to the present invention, the inorganic material may include an oxide, sulfide, phosphide, nitride or fluoride.

In the alkali metal-ion secondary battery according to the present invention, the positive electrode may include one of CuCl+NaCl, CuCl+LiCl and CuCl+KCl as the metal chloride and the alkali metal chloride.

Another aspect of the present invention provides a positive electrode for an alkali metal-ion secondary battery containing a metal chloride and an alkali metal chloride.

The positive electrode for an alkali metal-ion secondary battery may further include a porous carbon material and a binder, and the metal chloride and the alkali metal chloride may be contained at 50 to 99 wt%.

Still another aspect of the present invention provides a positive electrode for an alkali metal-ion secondary battery including an alkali metal chloride and a metal chloride containing a metal different from an alkali metal.

According to the present invention, as a sulfur dioxide-based inorganic electrolyte is used as an electrolyte solution, problems of battery performance and safety may be solved.

Since the alkali metal-ion secondary battery according to the present invention uses a mixture of a metal chloride and an alkali metal chloride as a positive electrode material, and an alkali-ion electrolyte as a sulfur dioxide-based inorganic electrolyte, the battery can be used at room temperature, pre-charged, and have improved energy density and power density, compared with a conventional sodium-ion secondary battery.

### BRIEF DESCRIPTION OF DRAWINGS

FIG. 1 is a diagram illustrating an alkali metal-ion secondary battery including a positive electrode containing a metal chloride and an alkali metal chloride according to the present invention.
FIG. 2 is a graph showing ion conductivity of a sulfur dioxide-based inorganic electrolyte solution of FIG. 1.
FIG. 3 shows scanning electron microscope (SEM) and energy dispersive spectroscopy (EDS) images of a positive electrode for an alkali metal-ion secondary battery according to an exemplary embodiment of the present invention.
FIG. 4 is a graph showing a charging/discharging characteristic of a positive electrode consisting of CuCl and NaCl according to an exemplary embodiment of the present invention.

### DETAILED DESCRIPTION

In the following description, detailed descriptions of well-known functions or constructions will be omitted since they would obscure the invention in unnecessary detail.

It should be understood that the terms used in the specification and the appended claims should not be construed as limited to general and dictionary meanings, but interpreted based on the meanings and concepts corresponding to technical aspects of the present invention on the basis of the principle that the inventor is allowed to define terms appropriately for the best explanation. Therefore, the description proposed herein is just a preferable example for the purpose of illustrations only, not intended to limit the scope of the invention, so it should be understood that other equivalents and modifications could be made thereto without departing from the spirit and scope of the invention.

Hereinafter, exemplary embodiments of the present invention will be described in detail.

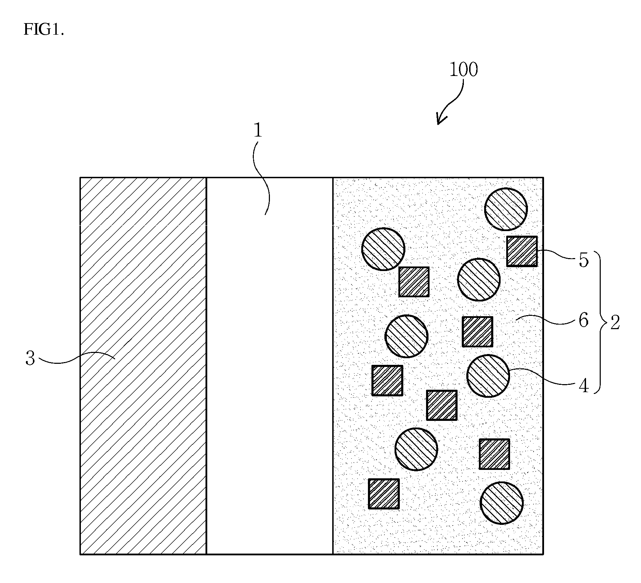

FIG. 1 is a diagram illustrating an alkali metal-ion secondary battery including a positive electrode containing a metal chloride and an alkali metal chloride according to the present invention.

Referring to FIG. 1, an alkali metal-ion secondary battery 100 according to the present invention includes a positive electrode 2, a negative electrode 3 and a sulfur dioxide-based inorganic electrolyte solution 1. Here, the positive electrode 2 includes a metal chloride 4 and an alkali metal chloride 5 as positive electrode materials. The sulfur dioxide-based inorganic electrolyte solution 1 includes a sulfur dioxide-based inorganic electrolyte.

The positive electrode 2 includes the metal chloride 4 and the alkali metal chloride 5, and besides, may include a porous carbon material and a binder 6. Such a positive electrode 2 provides a place in which a redox reaction of the sulfur dioxide-based inorganic electrolyte occurs.

Here, the metal chloride 4 is a chloride containing a metal different from an alkali metal.

For example, the metal chloride 4 may include one or at least two of CuCl₂, WCl₅, WCl₄, CuCl, NiCl₂, FeCl₂, FeCl₃, CoCl₂, MnCl₂, CrCl₂, CrCl₃, VCl₂, VCl₃, ZnCl₂, ZrCl₄, NbCl₅, MoCl₃, MoCl₅, RuCl₃, RhCl₃, PdCl₂, AgCl, and CdCl₂.

As the alkali metal chloride 5, NaCl, LiCl, or KCl may be used, but the present invention is not limited thereto.

For example, the metal chloride 4 and the alkali metal chloride 5 may be CuCl+NaCl, CuCl+LiCl or CuCl+KCl. When the positive electrode 2 includes CuCl and NaCl, dissipation of CuCl₂ and NaCl occurs in pre-charging. In discharging, reversible formation of CuCl and NaCl in an initial state occurs.

Contents of the metal chloride 4 and the alkali metal chloride 5 in the positive electrode 2 may be 50 to 99 wt%, and preferably, 70 to 95 wt% to enable the blend of additional materials to improve characteristics of the positive electrode 2.

The porous carbon material included in the positive electrode 2 may include one or at least two heteroelements when needed. The heteroelement refers to nitrogen (N), oxygen (O), boron (B), fluorine (F), phosphorus (P), sulfur (S) or silicon (Si). A content of the heteroelement may be 0 to 20 at%, and preferably 5 to 15 at%. When the content of the heteroelement is less than 5 at%, an effect of increasing capacity according to the addition of the heteroelement is insignificant, and when the content of the heteroelement is more than 15 at%, electric conductivity of the carbon material and electrode moldability are reduced.

The negative electrode 3 includes a carbon or metal material not containing sodium. For example, as the negative electrode 3, a carbon-, metal-, alloy-, intermetallic compound-based material, or an inorganic material may be used. Here, as the metal-, alloy- and intermetallic compound-based materials, a material including tin (Sn), silicon (Si) or antimony (Sb) may be used. The inorganic material includes an oxide, a sulfide, a phosphide, a nitride or a fluoride. A content of the negative electrode material in the negative electrode 3 may be 50 to 99 wt%.

In addition, the sulfur dioxide-based inorganic electrolyte solution 1 used as an electrolyte and a positive electrode active material includes a sulfur dioxide-based inorganic electrolyte (alkali metal salt-xSO₂) containing an alkali metal salt and SO₂. That is, the sulfur dioxide-based inorganic electrolyte is an alkali metal ion electrolyte.

Such a sulfur dioxide-based inorganic electrolyte solution 1 corresponds to a molar ratio (x) of SO₂ to an alkali metal salt of 0.5 to 10, and preferably, 1.5 to 3.0. When the molar ratio (x) of the SO₂ is less than 1.5, ion conductivity of the electrolyte is decreased, and when the molar ratio (x) of the SO₂ is more than 3.0, a vapor pressure of the electrolyte is increased.

Types of the alkali metal salt include a sodium salt, a lithium salt, and a potassium salt. For example, as the sodium salt, NaAlCl₄, NaGaCl₄, Na₂CuCl₄, Na₂MnCl₄, Na₂CoCl₄, Na₂NiCl₄, Na₂ZnCl₄, or Na₂PdCl₄ may be used. Among such various sodium salts, NaAlCl₄ exhibits a relatively excellent battery characteristic. As a lithium salt, LiAlCl₄, LiGaCl₄, LiBF₄, LiBCl₄, or LiInCl₄ may be used. In addition, as a potassium salt, KAlCl₄ may be used.

The sulfur dioxide-based inorganic electrolyte solution 1 may be determined according to a type of the alkali metal chloride 5 included in the positive electrode 2. For example, when the alkali metal chloride 5 is sodium chloride, a sodium salt is used, when the alkali metal chloride 5 is lithium chloride, a lithium salt is used, and when the alkali metal chloride 5 is potassium chloride, a potassium salt is used. For example, when the sodium chloride is NaCl, an electrolyte of NaAlCl₄-xSO₂ may be used. When the lithium chloride is LiCl, an electrolyte of LiAlCl₄-xSO₂ may be used. In addition, when the potassium chloride is KC1, an electrolyte of KAlCl₄-xSO₂ may be used.

To evaluate an electrochemical characteristic of the alkali metal-ion secondary battery to which the positive electrode material according to the exemplary embodiment of the present invention is applied, a positive electrode and a cell for the alkali metal-ion secondary battery including the positive electrode to be described below were manufactured.

Here, a sulfur dioxide-based inorganic electrolyte solution includes an electrolyte of NaAlCl₄-xSO₂. To manufacture the sulfur dioxide-based inorganic electrolyte solution 1, an SO₂ gas may be injected into a mixture of NaCl and AlCl₃ (or NaAlCl₄ single salt).

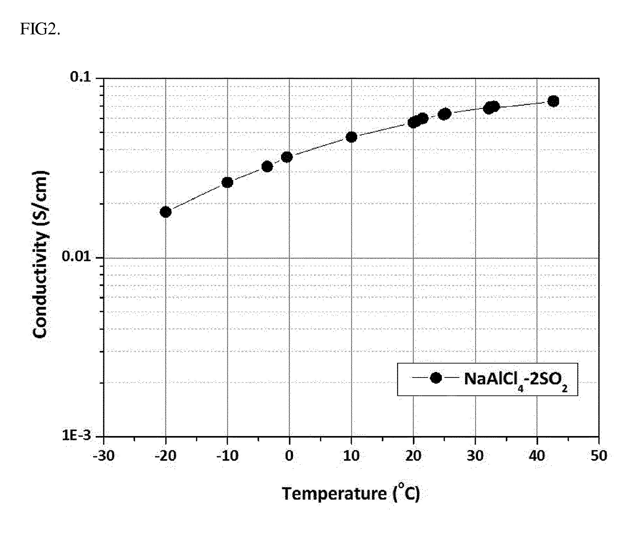

FIG. 2 is a graph showing ion conductivity of the sulfur dioxide-based inorganic electrolyte solution of FIG. 1.

Referring to FIG. 2, the sulfur dioxide-based inorganic electrolyte solution containing the electrolyte of NaAlCl₄-xSO₂ was analyzed through raman spectroscopy. It was confirmed that the sulfur dioxide-based inorganic electrolyte solution containing the electrolyte of NaAlCl₄-xSO₂ exhibited a high sodium ion conductivity close to 0.1 S/cm and a relatively high conductivity even at a low temperature, and was maintained in a liquid state.

The positive electrode according to the exemplary embodiment was formed by simply mixing CuCl and NaCl. A content of the mixture of the metal chloride and the alkali metal chloride in the positive electrode is 50 to 99 wt%, and preferably 70 to 95 wt%.

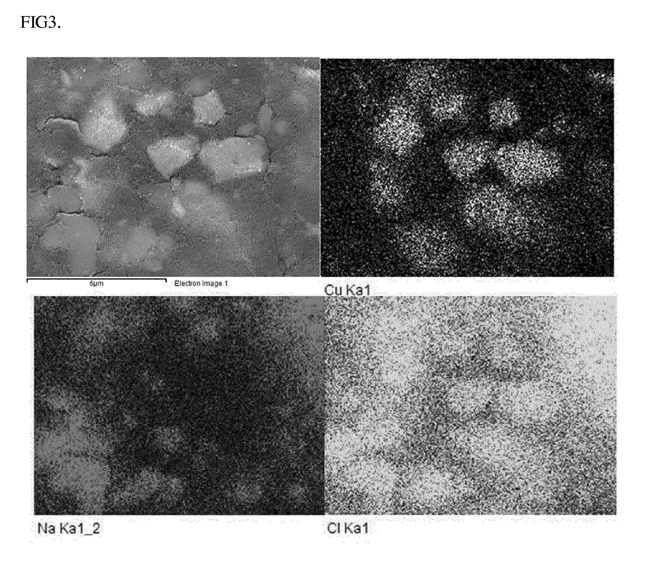

FIG. 3 shows scanning electron microscope (SEM) and energy dispersive spectroscopy (EDS) images of the positive electrode for the alkali metal-ion secondary battery according to the exemplary embodiment of the present invention.

Referring to FIG. 3, in pre-charging, CuCl₂ formation and NaCl dissipation occur, and in subsequent discharging, reversible formation of CuCl and NaCl in an initial state occurs.

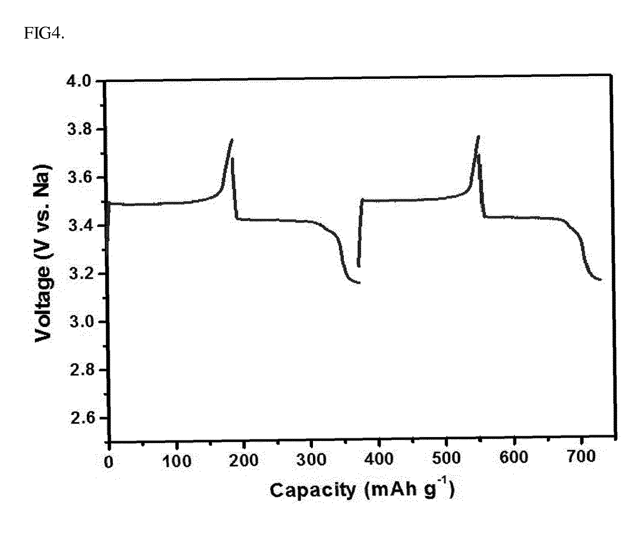

A charging/discharging characteristic of the positive electrode consisting of CuCl and NaCl is shown in FIG. 4. Here, FIG. 4 is a graph showing the charging/discharging characteristic of the positive electrode consisting of CuCl and NaCl.

Referring to FIG. 4, it can be known that the alkali metal-ion secondary battery according to the present invention has a high discharging voltage of 3 V or more, and an excellent life span characteristic.

According to the present invention, as a sulfur dioxide-based inorganic electrolyte is used as the electrolyte solution 1, problems of battery performance and safety may be solved.

As the alkali metal-ion secondary battery according to the present invention uses the mixture of the metal chloride and the alkali metal chloride as a positive electrode material, the battery can be used at room temperature and pre-charged, and have improved energy density and power density.

In this specification, exemplary embodiments of the present invention have been classified into the first, second and third exemplary embodiments and described for conciseness. However, respective steps or functions of an exemplary embodiment may be combined with those of another exemplary embodiment to implement still another exemplary embodiment of the present invention.

The present invention relates to a positive electrode containing a metal chloride and an alkali metal chloride and an alkali metal-ion secondary battery including the same. The alkali metal-ion secondary battery according to the present invention includes a negative electrode, a positive electrode containing a metal chloride and an alkali metal chloride, and a sulfur dioxide-based inorganic electrolyte solution containing an inorganic electrolyte including sulfur dioxide (SO₂) and an alkali metal salt. As the alkali metal-ion secondary battery according to the present invention uses a mixture of the metal chloride and the alkali metal chloride as a positive electrode material, and an alkali-ion electrolyte as a sulfur dioxide-based inorganic electrolyte, compared to the conventional sodium-ion secondary battery, the alkali metal-ion secondary battery can be used at room temperature and pre-charged, and have improved energy density and power density.

## Claims

1. An alkali metal-ion secondary battery, comprising:
a negative electrode;
a positive electrode containing a metal chloride and an alkali metal chloride; and
a sulfur dioxide-based inorganic electrolyte solution containing an inorganic electrolyte including sulfur dioxide (SO₂) and an alkali metal salt.

2. The battery of claim 1, wherein the metal chloride includes CuCl₂, WCl₅, WCl₄, CuCl, NiCl₂, FeCl₂, FeCl₃, CoCl₂, MnCl₂, CrCl₂, CrCl₃, VCl₂, VCl₃, ZnCl₂, ZrCl₄, NbCl₅, MoCl₃, MoCl₅, RuCl₃, RhCl₃, PdCl₂, AgCl or CdCl₂.

3. The battery of claim 1, wherein the alkali metal chloride includes NaCl, LiCl or KCl.

4. The battery of claim 1, wherein the metal chloride and the alkali metal chloride in the positive electrode are contained at a content of 50 to 99 wt%.

5. The battery of claim 1, wherein the negative electrode includes a carbon or metal material not containing sodium.

6. The battery of claim 1, wherein the negative electrode includes a carbon-, metal-, alloy- or intermetallic compound-based material or an inorganic material.

7. The battery of claim 6, wherein the metal-, alloy- and intermetallic compound-based materials include tin (Sn), silicon (Si) or antimony (Sb).

8. The battery of claim 6, wherein the inorganic material includes an oxide, a sulfide, a phosphide, a nitride or a fluoride.

9. The battery of claim 1, wherein the positive electrode includes one of CuCl+NaCl, CuCl+LiCl and CuCl+KCl as the metal chloride and the alkali metal chloride.

10. A positive electrode for an alkali metal-ion secondary battery, comprising a metal chloride and an alkali metal chloride.

11. The positive electrode of claim 10, wherein the metal chloride includes CuCl₂, WCl₅, WCl₄, CuCl, NiCl₂, FeCl₂, FeCl₃, CoCl₂, MnCl₂, CrCl₂, CrCl₃, VCl₂, VCl₃, ZnCl₂, ZrCl₄, NbCl₅, MoCl₃, MoCl₅, RuCl₃, RhCl₃, PdCl₂, AgCl or CdCl₂.

12. The positive electrode of claim 11, wherein the alkali metal chloride includes NaCl, LiCl or KCl.

13. The positive electrode of claim 12, further comprising:
a porous carbon material and a binder,
wherein the metal chloride and the alkali metal chloride are contained at 50 to 99 wt%.

14. The positive electrode of claim 10, wherein the metal chloride and the alkali metal chloride include one of CuCl+NaCl, CuCl+LiCl and CuCl+KCl.

15. A positive electrode for an alkali metal-ion secondary battery, comprising an alkali metal chloride and a metal chloride containing a metal different from an alkali metal.
